# EUROPEAN PATENT SPECIFICATION

(11) **EP 2 554 756 B1**
(45) Date of publication and mention of the grant of the patent: **10.03.2021**
(21) Application number: 12179449.9
(22) Date of filing: 06.08.2012
(51) Int. Cl.: E04B 1/14, E04C 2/24, E04C 2/296, B32B 5/24, E04B 2/56, E04B 2/70, E04B 1/61

(54) **A panel and a method for building panels**
Tafel und Verfahren zum Bau von Tafeln
Panneau et procédé de construction de panneaux

(30) Priority: 05.08.2011 GB 201113574
(43) Date of publication of application: 06.02.2013
(73) Proprietor: Keystone Lintels Limited, Cookstown County Tyrone BT90 9DG (GB)
(72) Inventor: Coyle, Sean, Cookstown, Tyrone BT80 9DG (GB)
(74) Representative: Hanna, John Philip

(56) References cited:
- EP-A1- 2 530 212
- WO-A1-2004/003307
- WO-A2-01/31130
- WO-A2-2009/125289
- DE-A1- 10 016 691
- DE-C- 952 299
- US-A- 2 921 462

## Description

The present invention relates to a panel and method for building panels and in particular to a method and arrangement for building structural insulated panels.

Structural insulated panels (SIP's) have gained in popularity and market share over the previous five to ten years. These strong, lightweight, and highly efficient building panels are generally constructed from a thermal insulating core, formed from a material such as polyurethane foam, sandwiched between two orientated strand boards (OSB's), which are generally wood flakes or strands bonded together with resins, binders, and waxes. SIP panels have greater strength in terms of both axial loading and racking than conventional timber framing, are relatively simple to build with and provide extremely good thermal insulation.

SIP panels are generally joined using an insert in the form of a dowel or spline that is placed between two panels, within a routered out cavity in the foam insulation. Fixings are then driven through the OSB's and into the inserts, forming a joint between two SIP panels. These inserts are typically either wooden or formed from small sections of SIP's. These joining methods are sufficient in terms of structure; however, the cost to create the cavities into which the inserts are placed can be expensive in terms of tooling and labour. SIP panels are generally manufactured in widths of 1.2 metres of various lengths up to 6m long so to manufacture a roof, wall or floor panel with greater widths requires these prefabricated SIP panels to be jointed in these ways.

EP 2 530 212 A1 discloses a method of joining two SIP panels together, however it does not teach how to construct a panel of a desired size *de novo.*

US 2 921 462 discloses concrete sheets that can be joined together with metal connector plates that fix the panels to one another about their corners.

DE 100 16 691 A1 discloses a method of joining two sheets or panels by placing them together and nailing or screwing an elongate piece of wood across the joint to fix them together.

WO 2004/003307 A1 discloses multiple methods of joining two panels together, the majority of which involve modifying the central portion of the panel to accommodate a bridging member that extends between the two panels and is glued in place.

WO 2009/125289 A2 discloses fixing adjacent panels together by removing a portion of the central, insulating layer at the joint and filling with glue.

It is an object of the present invention to obviate or mitigate the problem of incurring additional expense due to tooling and labor costs associated with joining small panels to produce large panels to span larger areas and in particular SIP panels.

Accordingly, the present invention provides a method of manufacturing a construction panel comprising the steps of laying a plurality of rigid support members together, each rigid support member having two main planar surfaces with perimeter surfaces extending between these main planar surfaces, laying the plurality of rigid support members so that each rigid support member has at least one perimeter surface in an abutting relationship with the perimeter surface of an adjacent rigid support member, bridging at least part of the length of abutting perimeter surfaces with at least one connector means for connecting the plurality of rigid support members together into a predetermined shape and size of modular rigid panel member, the method further comprising manufacturing a sandwich type construction panel by forming a second similar shape and size of modular rigid panel member using the same method and placing an insulation means in a gap between the modular rigid panel members characterised in that the connector means comprises means for mechanically fixing the connector means onto the planar surfaces of two adjacent rigid outer support members, the mechanical fixing means comprising spikes, the spikes protruding in a spaced apart configuration from the main plane of the mechanical fixing means, and wherein the method comprises mechanically fixing the connector means onto the planar surfaces of two adjacent rigid support members using the spikes.

Preferably, the method comprising the steps of laying the rigid support members on a preformed assembly jig.

Advantageously, the present method avoids the problem of disposing of waste polyurethane foam generated as a result of the current method of creating oversized panels by jointing standard SIP panels. The disposal of PU foam is a major environmental issue as the PU foam requires special treatment for disposal because it is prohibited to burn PU foam.

Preferably, the method comprising placing spacer means on at least one of the modular rigid panel members for supporting the two modular rigid panels members in a spaced apart relationship defining the gap there between.

Preferably, the method comprising connecting the rigid support members by connector plates.

Ideally, the method comprising providing connector means on at least one surface of at least one of the modular rigid panel members.

Preferably, the method comprising pre-stressing the connector means. Advantageously, pre-stressing minimises the risk of bowing in rigid support members by holding them in compression. Pre-stressing the connector means also allows reduced depths of rigid support members to be used for equivalent design strengths. The pre-stressed rigid support members are resilient and will recover from the effects of a greater degree of overload than a similar unstressed rigid support member. Furthermore, if the rigid support member is subject to overload, cracks, which may develop, will close up on removal of the overload. The pre-stressing enables a modular rigid panel member to be formed from a number of segmented rigid support members. Furthermore, lighter elements permit the use of longer spanning members with a high strength to weight characteristic. The ability to control deflections in pre-stressed rigid support members permits longer spans to be achieved.

Preferably, the method comprising retaining the connector means in the rigid support members via the mechanical fixing means having barbs.

Ideally, the connector means can be fixed to the planar surfaces of two adjacent rigid support members by any mechanical fixing means such as nails, screws, studs, male and female members or any combination of such mechanical fixing means.

Ideally, the connector means can be fixed to the planar surfaces of two adjacent rigid support members by bonding, gluing or welding or any combination of these.

Preferably, the method comprising providing the insulation material from any one of or any combination of polystyrene, polyurethane, polyisocyanurate, polyethylene, wood panel or fibre glass.

Preferably, the method comprising bonding or mechanically fixing the insulation material onto an internal facing surface of at least one of the modular rigid panel members.

Alternatively, the method comprising blowing the insulation material into the gap between two mutually opposing internal facing surfaces of the two modular rigid panel members.

Ideally, the method comprising providing the rigid support member from oriented strand boards, fibre cement boards or slate boards.

Ideally, the method comprising providing reinforcing means in operable engagement with at least one rigid support member.

Ideally, the method comprising providing reinforcing means on at least one surface of at least one of the rigid support members.

Preferably, the method comprising providing the reinforcing means on both surfaces of at least one of the rigid support members.

Preferably, the method comprising pre-stressing the reinforcing means.

Ideally, the method comprising mechanically coupling the reinforcing means to at least one of the rigid support members along its perimeter.

Ideally, the method comprising extending a plurality of reinforcing members along one or more surfaces of at least one of the rigid support members.

Preferably, the method comprising retaining the spacer means in place when the insulation material is located into the gap between the mutually opposing modular rigid panel members.

Ideally, the method comprising forming at least one aperture in the modular rigid panel members.

Preferably, the method comprising placing a reinforcing liner at least partly around the aperture.

Ideally, the method comprising at least partly surrounding the aperture with a reinforcing means.

Accordingly, the present invention also provides a sandwich type construction panel comprising a plurality of rigid outer support members, each rigid outer support member having two main planar surfaces with perimeter surfaces extending between these main planar surfaces, the plurality of rigid outer support members being assembled so that each rigid outer support member has at least one perimeter surface in an abutting relationship with the perimeter surface of an adjacent rigid outer support member, at least one connector means bridging at least part of the length of abutting perimeter surfaces for connecting the plurality of rigid outer support members together into a predetermined shape and size of modular rigid outer panel member, the connector means comprising means for mechanically fixing the connector means onto the planar surfaces of two adjacent rigid outer support members, the mechanical fixing means comprising spikes, the spikes protruding in a spaced apart configuration from the main plane of the mechanical fixing means a second similar shape and size of modular rigid outer panel member having generally the same configuration and an insulation means disposed in the gap between the modular rigid outer panel members and wherein reinforcing means is provided in operable engagement with at least one rigid outer support member.

Preferably, a spacer means is located on at least one of the modular rigid outer panel members for supporting the two modular rigid outer panels members in a spaced apart relationship defining a gap between them.

Preferably, the connector means is provided by connector plates

Ideally, the connector means are manufactured from metal.

Preferably, the connector plates are steel.

Ideally, the connector means is provided on at least one surface of at least one of the modular rigid outer panel members.

Preferably, the connector means is pre-stressed.

Preferably, the mechanical fixing means have barbs for retaining the connector means in the rigid outer support members.

Preferably, the insulation material is provided by any one of or any combination of polystyrene, polyurethane, polyisocyanurate, polyethylene, wood panel or fibre glass.

Preferably, the insulation material is bonded or mechanically fixed onto an internal facing surface of at least one of the modular rigid outer panel members.

Alternatively, the insulation material is blown into the gap between two mutually opposing internal facing surfaces of the two modular rigid outer panel members.

Ideally, the rigid outer support member is provided by oriented strand boards, fibre cement boards or slate boards.

Preferably, the rigid outer support member is made from a composite material.

Ideally, the rigid outer support member is manufactured from a polymeric matrix reinforced with fibres.

Ideally, the rigid outer support member is provided by fiber-reinforced polymers, FRPs, carbon-fiber reinforced plastic CFRP or glass-reinforced plastic GRP.

Preferably, the matrix is provided by a thermoplastic composite.

Ideally, the thermoplastic composite is a short fiber thermoplastics, a long fiber thermoplastics or a long fiber-reinforced thermoplastics.

Alternatively, the matrix is provided by a thermoset composite.

Ideally, the elongate composite member is provided by aramid fibre and carbon fibre in an epoxy resin matrix.

Preferably, the FRPs include wood comprising cellulose fibers in a lignin and hemicellulose matrix.

Preferably, the reinforcing means is provided by at least one metal component.

Ideally, the reinforcing means is provided by at least one metal wire, metal lattice, metal rod or metal plate.

Ideally, the reinforcing means is provided on at least one surface of at least one of the rigid outer support members.

Preferably, the reinforcing means is provided on both surfaces of at least one of the rigid outer support members.

Preferably, the reinforcing means is pre-stressed.

Ideally, the reinforcing means is mechanically coupled to at least one of the rigid outer support members.

Preferably, the reinforcing means is mechanically coupled to at least one of the rigid outer support members along its perimeter.

Ideally, a plurality of reinforcing members extend along one or more surfaces of at least one of the rigid outer support members.

Preferably, the spacer means comprises blocks of insulation material. Advantageously, the spacer means remain in place when the insulation material is located into the gap between the mutually opposing modular rigid outer panel members.

Ideally, the modular rigid outer panel members having at least one aperture.

Preferably, the aperture being reinforced with a liner.

Ideally, the aperture having reinforcing means at least partly surrounding the aperture, most preferably pressed into the modular outer rigid support panels.

Preferably, the sandwich type construction panel is for use a floor, wall or roof panel.

According to a further aspect of the invention, there is provided a rigid support member, the rigid support member having two main planar surfaces with perimeter surfaces extending between these main planar surfaces and reinforcing means provided in operable engagement with the rigid support member.

Preferably, the reinforcing means is provided by at least one metal component.

Ideally, the reinforcing means is provided by at least one metal wire, metal lattice, metal strap, metal rod or metal plate.

Ideally, the reinforcing means is provided on at least one surface of the rigid support member.

Preferably, the reinforcing means is provided on both surfaces of the rigid support member.

Preferably, the reinforcing means is pre-stressed.

Ideally, the reinforcing means is mechanically coupled to the rigid support member.

Preferably, the reinforcing means is mechanically coupled to the rigid support members along its perimeter.

Ideally, a plurality of reinforcing members extend along one or more surfaces of the rigid support member.

Ideally, the rigid support member is a construction panel made from the same range of materials described with reference to the rigid outer support member above.

Preferably, the rigid support member is formed for use as part of a panel, preferably a sandwich type construction panel and most preferably a SIP panel.

The invention will now be described with reference to the accompanying drawings which show by way of example only one embodiment of an oversized sandwich type construction panel in accordance with the invention. In the drawings:
Figure 1 is a plan view of an oversized sandwich type construction panel; and
Figure 2 is a perspective view of a connector plate.

Referring to the drawings, there is shown a sandwich type construction panel indicated generally by the reference numeral 1 having five rigid outer support members 2. Each rigid outer support member 2 has two main planar surfaces 3, 4 with perimeter surfaces 5 extending between these main planar surfaces 3, 4. The rigid outer support members 2 are assembled so that each rigid outer support member 2 has at least one perimeter surface 5 in an abutting relationship with the perimeter surface 5 of an adjacent rigid outer support member 2. A connector 7 bridges the length of abutting perimeter surfaces 5 for connecting two rigid outer support members 2 together into a predetermined shape and size of modular rigid outer panel member 8. A second similar shape and size of modular rigid outer panel member 8 having generally the same configuration is also provided. A spacer arrangement 9 is located on at least one of the modular rigid outer panel members 8 for supporting the two modular rigid outer panels members 8 in a spaced apart relationship defining a gap between them and an insulation material 10 is disposed in the gap.

The connectors 7 are provided by connector plates which are manufactured from metal and preferably steel. The connectors 7 are provided on at least one surface 3, 4 of at least one of the modular rigid outer panel members 8. The connectors 7 are pre-stressed. Advantageously, pre-stressing minimises the risk of bowing in rigid outer support members 2 by holding them in compression. Pre-stressing the connectors 7 also allows reduced depths of rigid outer support members 2 to be used for equivalent design strengths. The pre-stressed rigid outer support members 2 are resilient and will recover from the effects of a greater degree of overload than a similar unstressed rigid outer support member 2. Furthermore, if the rigid outer support member 2 is subject to overload, cracks, which may develop, will close up on removal of the overload. The pre-stressing enables a modular rigid outer panel member 8 to be formed from a number of segmented rigid outer support members 2. Furthermore, lighter elements permit the use of longer spanning members with a high strength to weight characteristic. The ability to control deflections in pre-stressed rigid outer support members 2 permits longer spans to be achieved.

The connectors 7 have an arrangement 11 for mechanically fixing the connectors 7 onto the planar surfaces 3, 4 of two adjacent rigid outer support members 2. The mechanical fixing arrangement 11 is an array of spikes 11. The spikes 11 protrude in a spaced apart configuration from the main plane 14 of the mechanical fixing arrangement 11. The spikes 11 have barbs 15 for retaining the connectors 7 in the rigid outer support members 2.

The insulation material is provided by any one of or any combination of polystyrene, polyurethane, polyisocyanurate, polyethylene, wood panel or fibre glass and most preferably polyurethane foam is used. The insulation material is bonded or mechanically fixed onto an internal facing surface of at least one of the modular rigid outer panel members 8. In an alternative forming method the insulation material is blown into the gap between two mutually opposing internal facing surfaces of the two modular rigid outer panel members 8. The rigid outer support member 2 is provided by oriented strand boards, fibre cement boards or slate boards.

In an alternative construction, the rigid outer support member 2 is made from a composite material. The rigid outer support member 2 is manufactured from a polymeric matrix reinforced with fibres. The rigid outer support member 2 is provided by fiber-reinforced polymers, FRPs, carbon-fiber reinforced plastic CFRP or glass-reinforced plastic GRP. The matrix is provided by a thermoplastic composite. The thermoplastic composite is a short fiber thermoplastics, a long fiber thermoplastics or a long fiber-reinforced thermoplastics. Alternatively, the matrix is provided by a thermoset composite. The elongate composite member is provided by aramid fibre and carbon fibre in an epoxy resin matrix. The FRPs include wood comprising cellulose fibers in a lignin and hemicellulose matrix.

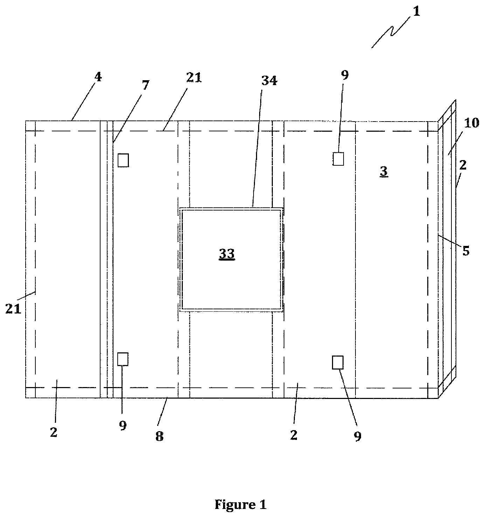

A reinforcing arrangement 21 is provided in operable engagement with at least one rigid outer support member 2. The reinforcing arrangement 21 is provided by at least one metal component. The reinforcing arrangement 21 is provided by at least one metal wire, metal lattice, metal rod, metal strap or metal plate. The reinforcing arrangement 21 is provided on at least one surface 4, the internal surface in the embodiment shown in Figure 1, of at least one of the rigid outer support members 2. The reinforcing arrangement 21 can alternatively be provided on both surfaces of the rigid outer support member 2. The reinforcing arrangement 21 is pre-stressed. The reinforcing arrangement 21 is mechanically coupled to the rigid outer support members 2. The reinforcing arrangement 21 is mechanically coupled to the rigid outer support members 2 along their perimeter. A plurality of reinforcing members 21 extend along one or more surfaces of the rigid outer support member 2.

The spacer arrangement 9 has blocks 9 of insulation material. Advantageously, the spacer arrangement 9 remains in place when the insulation material is located into the gap between the mutually opposing modular rigid outer panel members 8. The modular rigid outer panel member 8 has at least one aperture 33. The aperture 33 is reinforced with a liner 34. The aperture 33 has reinforcing members at least partly surrounding the aperture 33, most preferably pressed into the modular outer rigid support panels 8.

The sandwich type construction panel 1 is for use as a floor, wall or roof panel 1.

In use, a sandwich type construction panel 1 is manufactured comprising the steps of laying a plurality of rigid outer support members 2 on a preformed assembly jig. Each rigid outer support member 2 has two main planar surfaces 3, 4 with perimeter surfaces 5 extending between these main planar surfaces 3, 4. The plurality of rigid outer support members 2 are laid so that each rigid outer support member 2 has at least one perimeter surface 5 in an abutting relationship with the perimeter surface 5 of an adjacent rigid outer support member 2. At least part of the length of abutting perimeter surfaces 5 are bridged with at least one connector 7 for connecting the adjacent rigid outer support members 2 together into a predetermined shape and size of modular rigid outer panel member 8. A second similar shape and size of modular rigid outer panel member 8 is formed using the same method. An insulation material 10 is placed in the gap between the modular rigid outer panel members 8. A spacer arrangement 9 is disposed on the modular rigid outer panel members 8 for supporting the two modular rigid outer panels members 8 in a spaced apart relationship defining a gap there between.

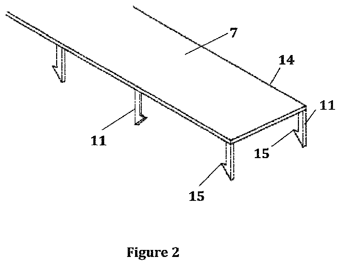

The rigid outer support members 2 are connected by connector plates 7 as shown in Figure 2. The connector plates 7 are placed on a surface 3, 4 of the modular rigid outer panel member 8. The connector plates 7 are pre-stressed and are mechanically fixed onto the planar surfaces of two adjacent rigid outer support members 7 using spikes 11. The spikes 11 protrude from the main plane of the mechanical fixing arrangement 11. The insulation material 10 is bonded or mechanically fixed onto an internal facing surface of the modular rigid outer panel member 8. Alternatively, the insulation material 10 is blown into the gap between two mutually opposing internal facing surfaces of the two modular rigid outer panel members 8. A reinforcing arrangement 21 is provided in operable engagement with a rigid outer support member 2. The reinforcing arrangement 21 is provided on a surface of the rigid outer support member 2 or on both surfaces of the rigid outer support member 2. The reinforcing arrangement 21 can be pre-stressed. The reinforcing arrangement 21 is mechanically coupled to the rigid outer support member 2 along its perimeter. The reinforcing arrangement 21 is provided by a plurality of reinforcing members along one or more surfaces of the rigid outer support member 2. The spacer arrangement 9 is retained in place when the insulation material is located into the gap between the mutually opposing modular rigid outer panel members 8. An aperture 33 is formed in the modular rigid outer panel members 8 and a reinforcing liner 34 is inserted to at least partly surround the aperture 33. It is also possible to at least partly surround the aperture 33 with a reinforcing arrangement, which can also be pre-stressed. It will of course be appreciated that any arrangement of apertures 44 can be formed in the panel 1 to suit the bespoke installation arrangement.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. A method of manufacturing a construction panel (1) comprising the steps of laying a plurality of rigid support members (2) together, each rigid support member (2) having two main planar surfaces (3, 4) with perimeter surfaces (5) extending between these main planar surfaces (3, 4), laying the plurality of rigid support members (2) so that each rigid support member (2) has at least one perimeter surface (5) in an abutting relationship with the perimeter surface (5) of an adjacent rigid support member (2), and bridging at least part of the length of abutting perimeter surfaces (5) with at least one connector means (7) for connecting the plurality of rigid support members (2) together into a predetermined shape and size of modular rigid panel member (8), the method further comprising manufacturing a sandwich type construction panel by forming a second similar shape and size of modular rigid panel member (8) using the same method and placing an insulation means (10) in a gap between the modular rigid panel members (8) **characterised in that** the connector means (7) comprises means for mechanically fixing the connector means (7) onto the planar surfaces (3, 4) of two adjacent rigid outer support members, the mechanical fixing means comprising spikes (11), the spikes (11) protruding in a spaced apart configuration from the main plane (14) of the mechanical fixing means, and wherein the method comprises mechanically fixing the connector means (7) onto the planar surfaces (3, 4) of two adjacent rigid support members (2) using the spikes (11).

2. A method as claimed in claim 1, the method comprising placing spacer means (9) on at least one of the modular rigid panel members (8) for supporting the two modular rigid panels members (8) in a spaced apart relationship defining the gap there between.

3. A method as claimed in claims 1 or 2, the method comprising connecting the rigid support members (2) by metal connector plates (7).

4. A method as claimed in any one of the preceding claims, the method comprising providing connector means (7) on at least one surface of the modular rigid panel members (8).

5. A method as claimed in any one of the preceding claims, the method comprising pre-stressing the connector means (7).

6. A method as claimed in any one of the preceding claims, the method comprising fixing the connector means (7) onto the planar surfaces (3, 4) of two adjacent rigid support members (2).

7. A method as claimed in any one of the preceding claims, the method comprising bonding or mechanically fixing the insulation material (10) onto an internal facing surface of at least one of the modular rigid panel members (8) or blowing the insulation material into the gap between two mutually opposing internal facing surfaces of the two modular rigid panel members (8).

8. A method as claimed in any one of the preceding claims, the method comprising providing reinforcing means (21) in operable engagement with at least one rigid support member (2).

9. A method as claimed in claim 8, the method comprising pre-stressing the reinforcing means (21).

## Patentansprüche

1. Verfahren zum Fertigen einer Bauplatte (1), umfassend die Schritte Zusammenlegen einer Vielzahl von starren Halteelementen (2), wobei jedes starre Halteelement (2) zwei planare Hauptflächen (3, 4) aufweist, wobei sich zwischen diesen planaren Hauptflächen (3, 4) Umfangflächen (5) erstrecken, Legen der Vielzahl von starren Halteelementen (2) derart, dass jedes starre Halteelement (2) mindestens eine Umfangfläche (5) in Anliegebeziehung mit der Umfangfläche (5) eines benachbarten starren Halteelements (2) aufweist, und Verbrücken von mindestens einem Teil der Länge der Anliegeumfangflächen (5) mit mindestens einem Verbinder (7) zum Verbinden der Vielzahl der starren Halteelemente (2) miteinander zu einer vorbestimmten Form und Größe des modularen starren Plattenelements (8), wobei das Verfahren des Weiteren Fertigen einer Bauplatte von Sandwichtyp umfasst, indem ein zweites modulares starres Plattenelement (8) von gleicher Form und Größe unter Verwendung desselben Verfahrens gebildet wird und eine Isolierung (10) in einem Spalt zwischen den modularen starren Plattenelementen (8) platziert wird,
**dadurch gekennzeichnet, dass** der Verbinder (7) Mittel zum mechanischen Fixieren des Verbinders (7) auf den planaren Flächen (3, 4) der beiden benachbarten starren äußeren Halteelemente umfasst, wobei das mechanische Fixiermittel Stifte (11) umfasst, die Stifte (11) in einer beabstandeten Konfiguration aus der Hauptebene (14) des mechanischen Fixiermittels vorspringen, und wobei das Verfahren mechanisches Fixieren des Verbinders (7) auf den planaren Flächen (3, 4) von zwei benachbarten starren Halteelementen (2) unter Verwendung der Stifte (11) umfasst.

2. Verfahren nach Anspruch 1, wobei das Verfahren Platzieren von Distanzmitteln (9) auf mindestens einem von den modularen starren Plattenelementen (8) zum Halten der beiden modularen starren Plattenelemente (8) in einer beabstandeten Beziehung umfasst, die den Spalt zwischen ihnen definiert.

3. Verfahren nach einem der Ansprüche 1 oder 2, wobei das Verfahren das Verbinden der starren Halteelemente (2) durch Metallverbinderplatten (7) umfasst.

4. Verfahren nach einem der vorhergehenden Ansprüche, wobei das Verfahren Bereitstellen von Verbindern (7) auf mindestens einer Fläche der modularen starren Plattenelemente (8) umfasst.

5. Verfahren nach einem der vorhergehenden Ansprüche, wobei das Verfahren Vorspannen des Verbinders (7) umfasst.

6. Verfahren nach einem der vorhergehenden Ansprüche, wobei das Verfahren Fixieren der Verbinder (7) auf den planaren Flächen (3, 4) von zwei benachbarten starren Halteelementen (2) umfasst.

7. Verfahren nach einem der vorhergehenden Ansprüche, wobei das Verfahren Bonden oder mechanisches Fixieren des Isoliermaterials (10) auf einer nach innen weisenden Fläche von mindestens einem der modularen starren Plattenelemente (8) oder Blasen des Isoliermaterials in den Spalt zwischen zwei sich gegenüber liegenden, nach innen weisenden Flächen der beiden modularen starren Plattenelemente (8) umfasst.

8. Verfahren nach einem der vorhergehenden Ansprüche, wobei das Verfahren Bereitstellen von Verstärkungsmitteln (21) in Wirkeingriff mit mindestens einem modularen starren Plattenelement (2) umfasst.

9. Verfahren nach Anspruch 8, wobei das Verfahren Vorspannen des Verstärkungsmittels (21) umfasst.

## Revendications

1. Procédé de fabrication d'un panneau de construction (1), comprenant les étapes de la pose d'une pluralité d'éléments de support rigides (2) ensemble, chaque élément de support rigide (2) ayant deux surfaces planes principales (3, 4) avec des surfaces périmétriques (5) s'étendant entre ces surfaces planes principales (3, 4), de la pose de la pluralité d'éléments de support rigides (2) de telle sorte que chaque élément de support rigide (2) ait au moins une surface périmétrique (5) dans une relation contiguë avec la surface périmétrique (5) d'un élément de support rigide adjacent (2), et du recouvrement d'au moins une partie de la longueur de surfaces périmétriques contiguës (5) avec au moins un moyen de raccordement (7) pour raccorder la pluralité d'éléments de support rigides (2) ensemble en une forme et une taille prédéterminées d'élément de panneau rigide modulaire (8), le procédé comprenant en outre la fabrication d'un panneau de construction de type sandwich en formant une seconde forme et seconde taille similaires d'élément de panneau rigide modulaire (8) en utilisant le même procédé et le placement d'un moyen d'isolation (10) dans un écart entre les éléments de panneau rigides modulaires (8), **caractérisé en ce que** le moyen de raccordement (7) comprend un moyen pour mécaniquement fixer le moyen de raccordement (7) sur les surfaces planes (3, 4) de deux éléments de support extérieurs rigides adjacents, le moyen de fixation mécaniques comprenant des pointes (11), les pointes (11) faisant saillie, dans une configuration mutuellement espacée, à partir du plan principal (14) du moyen de fixation mécanique, et dans lequel le procédé comprend la fixation mécanique du moyen de raccordement (7) sur les surfaces planes (3, 4) de deux éléments de support rigides adjacents (2) en utilisant les pointes (11).

2. Procédé selon la revendication 1, le procédé comprenant le placement d'un moyen d'espacement (9) sur au moins un des éléments de panneau rigides modulaires (8) pour supporter les deux éléments de panneau rigides modulaires (8) dans une relation espacée définissant l'écart entre ceux-ci.

3. Procédé selon les revendications 1 ou 2, le procédé comprenant le raccordement des éléments de support rigides (2) par des plaques de raccordement métalliques (7) .

4. Procédé selon l'une quelconque des revendications précédentes, le procédé comprenant la fourniture d'un moyen de raccordement (7) sur au moins une surface des éléments de panneau rigides modulaires (8).

5. Procédé selon l'une quelconque des revendications précédentes, le procédé comprenant l'application de précontrainte sur le moyen de raccordement (7).

6. Procédé selon l'une quelconque des revendications précédentes, le procédé comprenant la fixation du moyen de raccordement (7) sur les surfaces planes (3, 4) de deux éléments de support rigides adjacents (2).

7. Procédé selon l'une quelconque des revendications précédentes, le procédé comprenant la liaison ou la fixation mécanique du matériau d'isolation (10) sur une surface de parement interne d'au moins un des éléments de panneau rigides modulaires (8) ou le soufflage du matériau d'isolation dans l'écart entre deux surfaces de parement internes mutuellement opposées des deux éléments de panneau rigides modulaires (8).

8. Procédé selon l'une quelconque des revendications précédentes, le procédé comprenant la fourniture d'un moyen de renfort (21) en prise fonctionnelle avec au moins un élément de support rigide (2).

9. Procédé selon la revendication 8, le procédé comprenant l'application de précontrainte sur le moyen de renfort (21).
